# EUROPEAN PATENT APPLICATION

(11) **EP 1 571 789 A1**
(43) Date of publication of application: **07.09.2005**
(21) Application number: 04251291.3
(22) Date of filing: 05.03.2004
(51) Int. Cl.: H04L 12/56

(54) **Probabilistic link selection in routing algorithm**

(71) Applicant: SIEMENS AKTIENGESELLSCHAFT, 80333 München (DE)
(72) Inventor: Edwin, Richard, Southampton SO15 4HU (GB); Fan, Changpeng, Dr., 10557 Berlin (DE); Reeve, Andrew, Winchester Hants SO22 5AH (GB)

(57) **Abstract**

The present invention comprises method and an apparatus for finding a path for routing a call from a source-node (SN) to a destination-node (DN) through a communication network. According to the invention the source-node (SN) generates a random-number and depending on the generated random-number at least one path between the source-node (SN) and the destination-node (DN) will be selected from the source-node (SN).

## Description

The invention is related to a method and a network node for routing a call through a communication network preferably by using a Quality of Service routing algorithm.

A common and important technique for routing connections through a network is known as Source Node Routing (SNR). In this technique, the source of a new connection calculates the route based on its own knowledge of the network topology and the state and utilization of the links therein. Routers periodically, or following a threshold exceeding event, flood the state of the links to which they are attached throughout the network. In this way, the source nodes find out about the current state of the network from time to time. However the information (known as the link state database) rapidly becomes out of date, and also each source node has the same view of the network so that they all tend to choose the same set of links which soon become full causing calls to be blocked, while some links still have free capacity to support new connections. One possibility to solve this problem could be that the frequency of the link state flooding will be increased but this causes increased signalling traffic.

For finding a route from a source node to a destination node through a network, one well-known algorithm is Dijkstra's algorithm which computes the shortest path. One variant of this algorithm has sometimes been referred to as OSPF - Open Shortest Path First algorithm, since it is used in the Internet routing protocol with the same name, which has been specified by RFC 2328 and other related documents (J. Moy, "OSPF Version 2", RFC 2328, April 1998.). The use of QoS routing in mobile core networks has become necessary in order to meet the needs of multimedia applications and to improve the efficiency of the network. For QoS routing, routing algorithms must be designed to meet QoS constraints. One such algorithm is called CSPF, which stands for Constrained Shortest Path First. It is an algorithm which searches for the shortest path through a network which obeys certain constraints such as minimum bandwidth, maximum delay. This is based on the Dijkstra's algorithm for computation of the shortest path. CSPF can be used within a node running OSPF protocol.

Many studies have been performed into the benefits of QoS routing but these concentrate on the benefits of QoS routing without taking into account the effect of mobility by an ever increasing population of users. Mobile subscribers cause varying load on network elements and routers. There are unacceptable call blocking ratios during some periods of the day for non-QoS routing algorithms (e.g. OSPF). QoS routing algorithms are shown to cope with the varying population distributions much more efficiently than non-QoS algorithms.

The present invention aims to solve the blocking of calls problem.

Said problem is solved by the features mentioned in the independent claims. Preferred embodiments of the invention are described in the dependent claims.

One main aspect for finding a path for routing a call from a source-node to a destination-node through a communication network is a method and an apparatus, which solve the problem by using a shortest path algorithm such as Dijkstra or Bellman-Ford but with the distance being a random variable dependent on the link's capacity and free bandwidth. In this way routers will not tend to choose the same links and load sharing of the connections across the network will be achieved, decreasing congestion and increasing call acceptance probability. Any function of the links (paths) or the network could be used as a random variable including historical information and path parameters.

A main advantage of the invention is to solve the blocking of calls problem without requiring manual modification of the costs of the links involved, such that the invention can improve the overall efficiency of the network.

Preferred embodiments of the present invention will be described with reference to the accompanying drawing in which:
Figure 1 shows an example method for choosing a random distance for a link,
Figure 2 illustrates the selection of at least one path between a source node SN and a destination node DN.

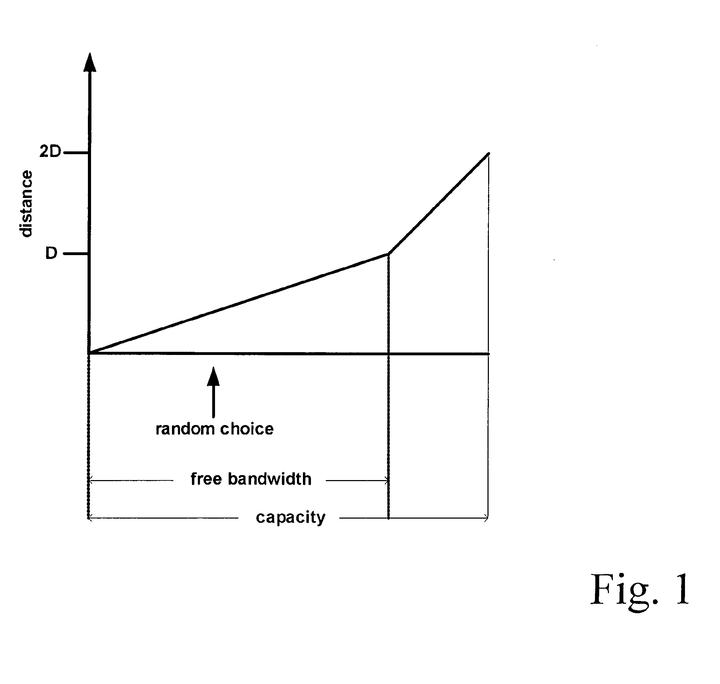

Figure 1 shows an example method for choosing a random distance for a link. Assume a baseline distance D for the link has been set up by configuration or other technique. A random number between 0 and the link's capacity is generated and the distance is determined from the graph. The distance is thus a resulted random number. It can be seen that if a link has a lot of free bandwidth, its distance is more likely to be in the range 0-D than in the range D-2D. The lower the distance, the more likely a link is to be selected. This type of function has the additional advantage that it is very unlikely that there will be ties, increasing the effectiveness of the load sharing.

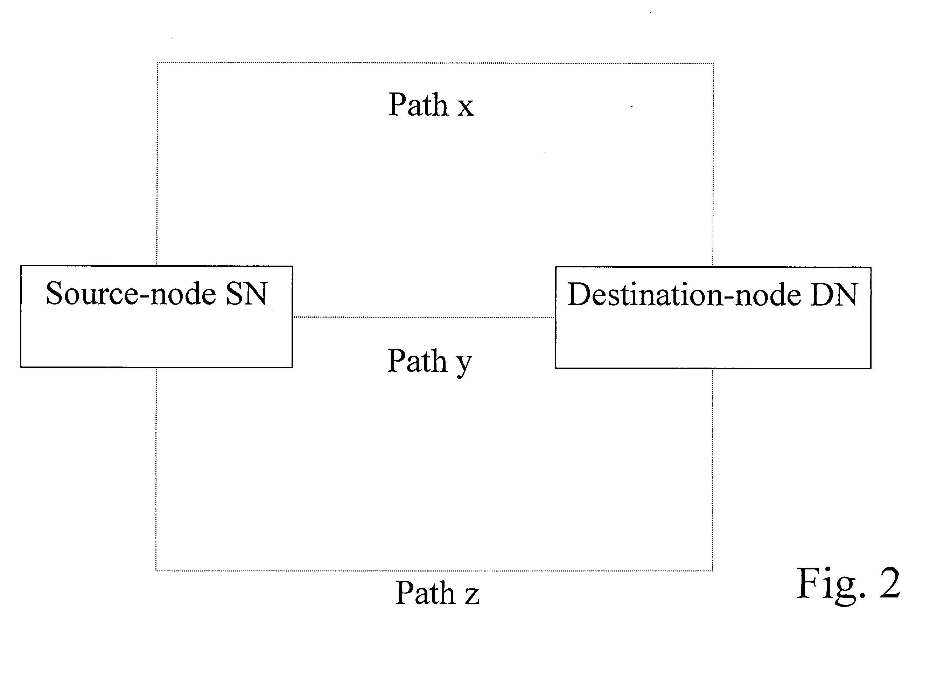

Figure 2 illustrates the selection of at least one path between a source node SN and a destination node DN. A source node SN maintains a links state database. One possibility to propagate/signal the state information to one's neighbor nodes is to employ OSPF protocol. The Link State Advertisement (LSA) message of OSPF serves mainly this purpose. Normally the link state database will be out of date owing to the changing configuration of connections through the network and the OSPF propagation delays. When the source Node SN wants to calculate a route/path from itself to a destination node DN it (SN) computes a route/path for the data of the call through the network. For finding a route/path from the source node SN to a destination node DN (i. e. mobile end device, mobile computer, computer, PDA etc.) through a network the source node SN uses an algorithm such as Dijkstra's algorithm, Bellman-Ford or any similar Quality of Service routing algorithm to select/compute a shortest path through the network. When considering a route/path, the shortest path from a source node SN to a destination node DN is used. This is the path with the minimal total cumulated distance or cost of the links it comprises. In this invention, the total distance or cost is a random number, being the sum of the distances/costs of the involved links, some of which are randomized. The distance/cost of at least one involved link is randomized. For such a link, a random number for its distance/cost is generated using a method such as that depicted in Fig. 1. A special case is to randomize the distances/costs of all involved links. A separate random number is normally generated for each randomized link of each path considered. With this invention each source node SN of the network generates random numbers of its own, independently from other nodes and selects the best path for routing the data of the call. Furthermore each route request uses different random numbers, independent of those of previous requests.

## Claims

1. Method for finding a path for routing a call from a source-node (SN) to a destination-node (DN) through a communication network,
**characterized in that** the source-node (SN) generates a random-number and that depending on the generated random-number at least one path between the source-node (SN) and the destination-node (DN) will be selected from the source-node (SN).

2. Method according to claim 1,
**characterized in that** the random number is a variance of a link distance, depending on the link capacity and/or the free bandwidth.

3. Method according to any one of the preceding claims,
**characterized in that** signalling to other nodes throughout the network is implemented by OSPF-LSA-messages.

4. Method according to any one of the preceding claims,
**characterized in that** the source-node (SN) generates for each selected path a separate random-number.

5. Method according to any one of the preceding claims,
**characterized in that** the random number is the sum of random variables calculated at each link of a considered path.

6. Method according to any one of the preceding claims,
**characterized in that** the method uses a Quality of Service routing algorithm for selecting a path.

7. Method according to claim 6,
**characterized in that** the Dijkstra- and/or the Bellman-Ford-Algorithm will be used as Quality of Service routing algorithm.

8. Method according to any one of the preceding claims,
**characterized in that** a destination node (DN) is an end device, an end device of a mobile network, a computer, a mobile computer and/or a PDA.

9. Method according to any one of the preceding claims,
**characterized in that** a communication network is a mobile communication network and/or a data network.

10. Apparatus for finding a path for routing a call from a source-node (SN) to a destination-node (DN) through a communication network,
- with the source-node (SN) for generating a random-number,
- with the source-node (SN) for selecting at least one path between the source-node (SN) and the destination-node (DN) depending on the generated random-number.

11. Apparatus according to claim 10,
**characterized in that** said apparatus for signalling use OSPF LSA messages.

## Amended claims

### Amended claims in accordance with Rule 86(2) EPC.

**1.** Method for finding a path for routing a call from a source-node (SN) to a destination-node (DN) through a communication network,
**characterized in**
**that** the source-node (SN) generates a random-number dependent on the link's capacity and free bandwidth,
**that** depending on the generated random-number at least one path between the source-node (SN) and the destination-node (DN) will be selected from the source-node (SN) and
**that** the source-node (SN) generates for each selected path a separate random-number.

**2.** Method according to claim 1,
**characterized in**
**that** the random number is a variance of a link distance.

**3.** Method according to any one of the preceding claims,
**characterized in**
**that** signalling to other nodes throughout the network is implemented by OSPF-LSA-messages.

**4.** Method according to any one of the preceding claims,
**characterized in**
**that** the random number is the sum of random variables calculated at each link of a considered path.

**5.** Method according to any one of the preceding claims,
**characterized in**
**that** the method uses a Quality of Service routing algorithm for selecting a path.

**6.** Method according to claim 5,
**characterized in**
**that** the Dijkstra- and/or the Bellman-Ford-Algorithm will be used as Quality of Service routing algorithm.

**7.** Method according to any one of the preceding claims,
**characterized in**
**that** a destination node (DN) is an end device, an end device of a mobile network, a computer, a mobile computer and/or a PDA.

**8.** Method according to any one of the preceding claims,
**characterized in**
**that** a communication network is a mobile communication network and/or a data network.

**9.** Apparatus for finding a path for routing a call from a source-node (SN) to a destination-node (DN) through a communication network,
- with the source-node (SN) for generating a random-number dependent on the link's capacity and free bandwidth,
- with the source-node (SN) for selecting at least one path between the source-node (SN) and the destination-node (DN) depending on the generated random-number
- with the source-node (SN) for generating a separate random-number for each selected path.

**10.** Apparatus according to claim 9,
**characterized in**
**that** said apparatus for signalling use OSPF LSA messages.
